# EUROPÄISCHE PATENTSCHRIFT

(11) **EP 2 921 317 B1**
(45) Veröffentlichungstag und Bekanntmachung des Hinweises auf die Patenterteilung: **15.11.2017**
(21) Anmeldenummer: 14001006.7
(22) Anmeldetag: 19.03.2014
(51) Int. Cl.: B44B 5/00, B30B 1/00

(54) **Pressblech oder Endlosband mit RFID-Transponder**
Press plate or endless belt with RFID transponder
Plaque de presse ou bande sans fin comportant un transpondeur RFID

(43) Veröffentlichungstag der Anmeldung: 23.09.2015
(73) Patentinhaber: HUECK Rheinische GmbH, 41747 Viersen (DE)
(72) Erfinder: Stoffel, Wolfgang, 47906 Kempen (DE)
(74) Vertreter: Ofner, Clemens

(56) Entgegenhaltungen:
- EP-A1- 1 803 548
- EP-A1- 2 189 276
- EP-A2- 1 721 742
- DE-A1- 10 227 649

## Beschreibung

Die Erfindung betrifft ein Pressblech oder Endlosband, umfassend einen flachen Körper mit einer Prägeoberfläche und zumindest einer nicht zur Prägung vorgesehenen Außenfläche.

Die aus dem Stand der Technik bekannten Pressbleche oder Endlosbänder werden zur Verpressung von Werkstoffplatten mit einer Laminatstruktur verwendet. Bei den Werkstoffplatten handelt es sich in der Regel um Fußbodenlaminate, Wand- oder Deckenverkleidungen sowie um Platten für die Möbelindustrie, welche Echtholzoberflächen oder andere natürliche Oberflächen ersetzen sollen. Ein Fußbodenlaminat besteht dabei aus mehreren Kernpapieren, einem Dekorpapier und gegebenenfalls einem Overlaypapier, welche mit einer Substratschicht verpresst werden, wobei die Papierlagen in einem Harz getränkt werden und dann miteinander in einer Presse mittels eines Pressbleches oder Endlosbandes bei erhöhter Temperatur verpresst werden. Das Dekorpapier ist mit einem Druck versehen, welcher eine natürliche Oberfläche, beispielsweise eine Holz- oder Steinoberfläche simuliert. In der Möbelindustrie können zusätzliche Faserplatten oder Kunststoffplatten eingesetzt werden, auf welchen ein in einem Harz getränktes Dekorpapier und gegebenenfalls ein in einem Harz getränktes Overlaypapier angeordnet wird. Dieser Stapel wird ebenfalls in einer Presse mittels eines Pressbleches oder Endlosbandes bei erhöhter Temperatur verpresst. In den meisten Anwendungen wird Melaminharz (Melamin-Formaldehyd) verwendet, welches ein wärmehärtender Kunststoff ist und durch die erhöhte Temperatur während des Pressvorganges aushärtet, sodass die verschiedenen Schichten fest miteinander verbunden werden. Alternativ können Prepregs, bestehend aus Dekorpapieren und Overlay- und/oder Underlaypapieren hergestellt werden, die nachträglich mit einer Substratschicht verleimt oder anderweitig verbunden werden.

Aus dem Stand der Technik ist weiterhin bekannt, dass die verpressten Materialien bei dem Pressvorgang mit einer Oberflächenstruktur versehen werden. Dazu weist das Pressblech oder Endlosband seinerseits eine Oberflächenstruktur in der Prägeoberfläche auf, deren Negativ bei dem Pressvorgang auf die Oberfläche der Werkstoffplatte übertragen wird. Da das verwendete Harz bei dem Pressvorgang aushärtet, wird die Oberflächenstruktur dauerhaft auf die Oberfläche der Werkstoffplatte übertragen. Durch die Oberflächenstruktur werden natürliche Oberflächen durch die so hergestellten Materialien noch besser dargestellt. Die jüngste Generation solcher Materialien weist das Merkmal auf, dass die Oberflächenstruktur mit dem Farbmuster des Druckes auf dem Dekorpapier deckungskonform ausgebildet ist. So können farblich voneinander verschiedene Bereiche mit unterschiedlichen Oberflächenstrukturen versehen werden, sodass zum Beispiel oberhalb der Holznerven eines gedruckten Holzmotivs eine Porenstruktur eingeprägt ist. Weiterhin kann oberhalb eines Astloches eines gedruckten Holzmotives eine entsprechende Oberflächenstruktur eingeprägt werden. Darüber hinaus können nichtimmanente Eigenschaften einer natürlichen Oberfläche, wie zum Beispiel Risse, simuliert werden.

Die Pressbleche und Endlosbänder bestehen meistens aus einem nicht rostenden Stahl als flacher Körper, wobei dieser hohen Anpressdrücken und Temperaturen bei dem Pressvorgang ausgesetzt wird. Darüber hinaus müssen die Pressbleche oder Endlosbänder eine gewisse Temperaturleitfähigkeit aufweisen, damit die Wärme von den Pressblechen oder Endlosbändern auf die Werkstoffplatte übertragen wird. Die strukturierte Prägeoberfläche der Pressbleche oder Endlosbänder wird regelmäßig mit einer metallischen Beschichtung versehen, beispielsweise einer Chrombeschichtung, welche die Härte der Prägeoberfläche erhöht und ferner die Oberfläche der Werkstoffplatte mit einem gewünschten Glanzgrad versehen kann. Durch die von einer metallischen Beschichtung bewirkte Erhöhung der Härte wird die Zahl an Verpressungen erhöht, bevor die Struktur der Prägeoberfläche zu stark verschlissen ist. Zu diesem Verschleiß kommt es insbesondere, wenn das in Harz getränkte Overlaypapier zusätzlich mit Feststoffpartikeln, bei denen es sich meistenteils um Korundpartikel handelt, versehen wird, um den Abrieb der verpressten Werkstoffplatten zu verringern und so die Lebensdauer dieser Werkstoffplatten zu erhöhen. Es ist auch bekannt, Nitrierverfahren zur Härtung der strukturierten Prägeoberfläche der Pressbleche oder Endlosbänder anzuwenden, oder eine Plasmabeschichtung vorzusehen.

Die Struktur der Prägeoberfläche selbst wird mittels einer Maske aus einem Ätzresist und einem Ätzbad oder Oberflächenabtragung mittels eines Lasers oder Wasserstrahls hergestellt. Für das Erreichen einer großen Strukturierungsgenauigkeit der Prägeoberfläche hat es sich bewährt, die Maske aus einem Ätzresist durch einen digital gesteuerten Druckkopf auf die Prägeoberfläche aufzutragen, wobei es sich bei dem Ätzresist vorzugsweise um einen UVaushärtenden Lack handelt. Anschließend wird das Pressblech oder Endlosband in ein Ätzbad überführt, wo es in den nicht durch die Ätzresistmaske abgedeckten Bereichen zu einer Materialabtragung und damit zu der Erzeugung einer Oberflächenstruktur kommt. Die Herstellung der Oberflächenstruktur der Prägeoberfläche mittels einer Ätzresistmaske kann dabei in mehreren Zyklen erfolgen, wobei die Ätzresistmaske in dem zweiten und allen nachfolgenden Zyklen auf eine bereits vorstrukturierte Prägeoberfläche aufgetragen wird. Auf diese Weise kann zunächst eine Grobstruktur und sodann eine Feinstruktur oder eine Oberflächenstruktur mit mehreren Strukturierungstiefen hergestellt werden. Die Verwendung eines Lasers ist ebenfalls geeignet, eine detailreiche Oberflächenstruktur der Prägeoberfläche zumindest im ersten Arbeitsgang herzustellen, da die Steuerung des Fokus eine beinahe punktgenaue Abtragung der Prägeoberfläche erlaubt. Die Verwendung eines Wasserstrahls zur Herstellung der Oberflächenstruktur der Prägeoberfläche ist ebenfalls eine Alternative zu einem Ätzbad, die insbesondere den Vorteil vergleichsweise geringer Herstellungskosten aufweist, da weder große Mengen ätzender Chemikalien verwendet und anschließend entsorgt werden müssen, noch energiereiche Laserapparaturen bereitgestellt werden müssen. Jedoch weist die Oberflächenstrukturierung mittels eines Wasserstrahis den Nachteil auf, dass die Strukturierungsgenauigkeit gegenwärtig geringer ist, als die Ätz- und die Laserstrukturierung, da ein Wasserstrahl nicht beliebig fokussiert werden kann. Beide Verfahren können aber zumindest zur Grobstrukturierung eingesetzt werden, während eine Feinstrukturierung mithilfe der Ätztechnologie erfolgen kann.

Aufgrund der in der Durchführung aufwändigen und teuren Strukturierungsverfahren und Oberflächenbehandlungen der Prägeoberfläche haben gattungsgemäße Pressbleche oder Endlosbänder einen hohen Preis. Dies gilt insbesondere für Pressbleche und Endlosbänder, deren Oberflächenstrukturen sehr detailliert bzw. naturgetreu ausgebildet sind. Durch die Verwendung spezieller Materialien und abschließender Oberflächenbehandlungen der Prägeoberfläche sind die Pressbleche oder Endlosbänder darüber hinaus für zahlreiche Pressvorgänge geeignet, bevor sie einen merklichen Verschleiß aufweisen. Mit solchen Pressblechen oder Endlosbändern können bis zu 40.000 Verpressungen durchgeführt werden. Wenn ein Pressblech oder Endlosband soweit verschlissen ist, dass dies auf der Pressgutoberfläche durch einen Verlust an Prägequalität erkennbar ist, erfolgt in der Regel eine Rückgabe des Pressbleches oder Endlosbandes an den Hersteller, welcher die Oberflächenstruktur des Pressbleches oder Endlosbandes in der ursprünglichen Qualität wieder neu erzeugt. Zu diesem Zweck muss der Hersteller der Pressbleche oder Endlosbänder eine sorgfältige und aufwändige Lagerhaltung betreiben, da er aufgrund begrenzter Kapazitäten bisweilen zahlreiche wieder aufzubereitende Pressbleche oder Endlosbänder auf Lager halten muss.

Bei Pressblechen oder Endlosbändern mit einer sehr großen Lebensdauer, also sehr guten Verschleißeigenschaften, aufgrund besonderer Oberflächenbehandlung kann die Herstellung sehr aufwändig und teuer sein. Aus diesem Grund bietet sich eine Vermietung der Pressbleche oder Endlosbänder an, wobei der Kunde die Anzahl der vorgenommenen Verpressungen bezahlt. Hierzu ist es erforderlich die Anzahl der Verpressungen zu erfassen und das Pressblech oder Endlosband einem bestimmten Kunden zuzuordnen.

Die EP 1 721 742 A2 offenbart einen Prägekalander zum Prägen einer flächigen Materialbahn. Der Prägekalander umfasst Prägehülsen, die mit Profilierungen für die Prägung versehen sind. Die Prägehülsen umfassen ein Sende- und/oder Empfangselement insbesondere in RFID-Technik, das einen Datenspeicher umfasst. Im Datenspeicher ist eine Kenngröße für die Prägehülse abgelegt.

Vor diesem Hintergrund ist es Aufgabe der vorliegenden Erfindung, ein Pressblech oder Endlosband bereitzustellen, welches einfach identifizierbar ist. Eine weitere Aufgabe besteht darin die durchgeführten Nutzungshandlungen erfassen zu können.

Zur Lösung der ersten Aufgabe ist vorgesehen, dass das Pressblech oder Endlosband zumindest einen RFID-Transponder aufweist, wobei der RFID-Transponder mit einem elektronischen Speicher ausgestattet ist, welcher von dem RFID-Transponder auslesbar und/oder beschreibbar ist, wobei in dem Speicher zumindest ein das Pressblech oder Endlosband identifizierender Datensatz gespeichert ist, und wobei
- das Pressblech oder Endlosband zumindest einen Temperatursensor aufweist, der mit dem RFID-Transponder zusammenwirkt, sodass die Messwerte in dem Speicher des RFID-Transponders speicherbar sind und/oder
- das Pressblech oder Endlosband zumindest einen Drucksensor aufweist, der mit dem RFID-Transponder zusammenwirkt, sodass die Messwerte in dem Speicher des RFID-Transponders speicherbar sind.

Weitere vorteilhafte Ausgestaltungen der Erfindung ergeben sich aus den Unteransprüchen.

Erfindungsgemäß weist das Pressblech oder Endlosband einen RFID-Transponder auf, welcher mit einem in ihm integrierten Speicher zusammenwirkt. Handelsübliche RFID-Transponder weisen neben einer Antenne und einem analogen Sende- und Empfangsschaltkreis, welcher auch Transceiver (Kunstwort aus Transmitter und Receiver) genannt wird, einen digitalen Schaltkreis und einen Speicher auf. Bei dem digitalen Schaltkreis kann es sich um einen Mikrocontroller handeln, wobei die Komplexität des RFID-Transponders maßgeblich dessen Preis bestimmt. Einige RFID-Transponder weisen einen sehr kleinen Speicher auf, auf dem lediglich ein Datensatz in Form einer Seriennummer, welche einen RFID-Transponder eindeutig identifiziert, gespeichert ist. Andere RFID-Transponder weisen einen größeren Speicher auf, auf welchem zusätzliche Daten gespeichert werden können. Durch einen RFID-Transponder ist ein Pressblech oder Endlosband leicht identifizierbar, da der Speicher des RFID-Transponders leicht mittels eines Lesegerätes ausgelesen werden kann. Ferner ist die Fehleranfälligkeit einer solchen elektronischen Identifizierung deutlich geringer als bei einer Identifizierung der Pressbleche oder Endlosbänder mittels einer eingravierten Seriennummer. Die Logistik der erfindungsgemäßen Pressbleche oder Endlosbänder ist darum gegenüber den aus dem Stand der Technik bekannten Pressbleche oder Endlosbänder deutlich vereinfacht und weniger fehleranfällig. Für das erfindungsgemäße Pressblech oder Endlosband sind auch solche RFID-Transponder geeignet, die über einen internen Speicher verfügen, auf dem neben der Seriennummer des RFID-Transponders auch Nutzungsdaten des Pressbleches oder Endlosbandes über dessen gesamte Lebensdauer oder einen Teil davon und/oder Herstellungsdaten des Pressbleches oder Endlosbandes gespeichert werden können.

Auf dem Speicher des RFID-Transponders können Nutzungsdaten und/oder Herstellungsdaten des Pressbleches oder Endlosbandes gespeichert werden. Die in dem Speicher zu speichernden Daten werden von einem RF-Sender übermittelt und von dem RFID-Transponder empfangen, welcher die empfangenen Daten dann in den Speicher schreibt. Der RFID-Transponder kann aber darüber hinaus Daten aus dem Speicher auslesen und diese an einen RF-Empfänger übertragen. Die Speicherung der Daten in dem Speicher und das Auslesen der in dem Speicher gespeicherten Daten kann daher drahtlos erfolgen. RFID-Transponder mit sehr kleinen Abmessungen sind bereits im Handel erhältlich, sodass ein Pressblech oder Endlosband kostengünstig mit diesen ausgestattet werden kann und es bedarf keines besonderen Fachpersonals, um die Aufrüstung der Pressbleche oder Endlosbänder vorzunehmen.

Die in dem Speicher gespeicherten Nutzungsdaten sind aus der Gruppe von Daten, bestehend aus Anpressdruck, Anpressdauer, Temperatur der Prägeoberfläche, Material der Werkstoffplatte, Zeitpunkt einer Verpressung, Anzahl an Verpressungen, Name und Anschrift einer oder mehrerer Personen oder Firmen, ausgewählt. In dem Speicher können zusätzlich Herstellungsdaten des Pressbleches oder Endlosbandes gespeichert werden, wobei die Herstellungsdaten aus der Gruppe von Daten, bestehend aus Materialien des Körpers, Beschichtungsmaterialien der Prägeoberfläche, Informationen über Oberflächenbehandlungen der Prägeoberfläche und Informationen über die Struktur der Prägeoberfläche, ausgewählt sind. Diese Nutzungsdaten ermöglichen eine vollständige Rekonstruktion der mit einem Pressblech oder Endlosband durchgeführten Nutzungshandlungen und ermöglichen darum eine Rechungsstellung auf Grundlage der mit dem Pressblech oder Endlosband tatsächlich durchgeführten Presshübe.

Ferner kann vorgesehen sein, dass der Anwender beziehungsweise Benutzer der Pressbleche oder Endlosbänder zusätzlich Daten an den RFID-Transponder überträgt, beispielsweise Uhrzeit des Pressvorgangs und Information über die Beschaffenheit der zu verpressenden Werkstoffplatten und welche Daten in dem Speicher gespeichert werden. Die Herstellungsdaten ermöglichen dahingegen eine genaue Dokumentation der ursprünglichen Beschaffenheit des Pressbleches oder Endlosbandes, also vor Durchführung der ersten Nutzungshandlung, die Nutzungsdauer und Einsatzzeiten.

Das erfindungsgemäße Pressblech oder Endlosband kann eine Sacklochbohrung oder Ausnehmung aufweisen, in welcher der RFID-Transponder angeordnet ist. Die Ausbildung einer Sacklochbohrung beispielsweise im Randbereich des Pressbleches oder Endlosbandes ist leicht und ist ohne großen Aufwand durch bekannte Verfahren möglich. Die Anordnung und Befestigung des RFID-Transponders in der Sacklochbohrung schützt diesen vor mechanischer Beschädigung bei der Anwendung der Pressbleche oder Endlosbänder. Die Sacklochbohrung ist dabei vorzugsweise an einer nicht zur Prägung vorgesehenen Außenfläche des Pressbleches oder Endlosbandes ausgebildet.

Weiterhin kann zwischen dem RFID-Transponder und dem Pressblech oder Endlosband eine thermische Isolation angeordnet sein, welche den RFID-Transponder vor zu großer Erhitzung schützt und damit eine ausreichend lange Betriebsdauer desselben ermöglicht.

In weiterer Ausgestaltung der Erfindung kann vorgesehen sein, dass der RFID-Transponder eine Spannungs- und Stromquelle umfasst, welche den RFID-Transponder mit Spannung und Strom versorgt. RFID-Transponder gibt es grundsätzlich in drei verschiedenen Ausführungsformen. Diese sind passive RFID-Transponder, semiaktive RFID-Transponder und aktive RFID-Transponder, wobei passive RFID-Transponder über keine eigene Spannungs- und Stromversorgung verfügen, sondern durch das von einem Sender eingestrahlte RF-Feld mit Energie versorgt werden und durch Modulation des eingestrahlten RF-Feldes mit einem Empfänger kommunizieren, wobei der Sender zugleich als Empfänger ausgelegt sein kann. Passive RFID-Transponder können sehr klein ausgeführt sein und weisen eine lange Lebensdauer auf. Allerdings kann die Datenübertragung von einem passiven RFID-Transponder an einen Empfänger nur über sehr kurze Reichweiten erfolgen, da passive RFID-Transponder über keinen eigenen Sender verfügen. Semiaktive RFID-Transponder sind mit einer Strom- und Spannungsquelle ausgestattet, jedoch nicht mit einem eigenen Sender, sodass auch semiaktive RFID-Transponder mit einem Empfänger über Modulation des von einem Sender ausgestrahlten RF-Feldes kommunizieren. Die Strom- und Spannungsquelle wird dazu verwendet, den digitalen Schaltkreis, welcher als Mikrocontroller ausgeführt sein kann, und gegebenenfalls den Speicher, sofern es sich um einen flüchtigen Speicher handelt, mit Strom und Spannung zu versorgen. Da die Modulation eines eingestrahlten RF-Feldes bei semiaktiven RFID-Transpondern von der eigenen Strom- und Spannungsquelle unterstützt wird, ist die Reichweite semiaktiver RFID-Transponder gegenüber derjenigen von passiven RFID-Transpondern deutlich größer. Aktive RFID-Transponder weisen dahingegen eine Spannungs- und Stromquelle in Form einer Batterie und einen eigenen Sender auf, welcher neben dem digitalen Schaltkreis, der als Mikrocontroller ausgeführt sein kann, und dem Speicher, sofern es sich um einen flüchtigen Speicher handelt, von der Strom- und Spannungsquelle versorgt wird. Die Übertragungsreichweite eines aktiven RFID-Transponders ist darum deutlich größer als die von semiaktiven RFID-Transpondern. Demnach können sowohl passive als auch semiaktive als auch aktive RFID-Transponder bei dem erfindungsgemäßen Pressblech oder Endlosband verwendet werden.

Die passiven RFID-Transponder werden vorzugsweise zur Identifizierung des Pressbleches oder Endlosbandes eingesetzt, während demgegenüber die semiaktiven oder aktiven RFID-Transponder mit einer eigenen Spannungsquelle aktiv zur Speicherung und Auslesung von Daten aus einem Speicher eingesetzt werden können und sich aus diesem Grunde hervorragend zur Erfassung der Nutzungsdaten während des Einsatzes eignen. Erfindungsgemäß ist vorgesehen, dass das Pressblech oder Endlosband zumindest einen Temperatursensor und/oder einen Drucksensor aufweist, der mit dem RFID-Transponder zusammenwirkt, sodass die Messwerte in dem Speicher des RFID-Transponders speicherbar sind. Im Falle eines Temperatursensors ist an einer nicht zur Prägung vorgesehenen Außenfläche des Körpers zumindest ein Temperatursensor angeordnet, welcher die Temperatur des Körpers misst und an den Speicher überträgt. Weiterhin kann in dem Körper zumindest ein Temperatursensor eingelassen sein. In einer weiteren Ausgestaltung kann die Anordnung eines Temperatursensors auf der Prägeoberfläche eines Pressbleches oder Endlosbandes erfolgen, soweit der Körper des Pressbleches oder Endlosbandes nicht vollständig aus einem Metall besteht und deswegen die Wärmeleitfähigkeit des Körpers gering sein kann. Wie oben dargelegt, erfolgt die Verpressung von Werkstoffplatten bei erhöhter Temperatur, sodass das verwendete Harz aushärtet. Dies hat zur Folge, dass über eine Temperaturmessung jede Verpressung registriert werden kann. Die Speicherung der Temperaturmessdaten in dem Speicher ermöglicht daher eine Rekonstruktion der mit einem Pressblech oder Endlosband durchgeführten Presshübe. Im Falle eines Drucksensors ist die Anordnung eines Drucksensors auf der Prägeoberfläche eines Pressbleches oder Endlosbandes vorgesehen, wodurch eine Registrierung des Anpressdruckes bei einer Verpressung möglich wird. Der Anpressdruck hat einen maßgeblichen Einfluss auf den Verschleiß der Prägeoberfläche des Pressbleches oder Endlosbandes. Die Temperatur- und/oder Druckmessdaten werden in dem Speicher abgelegt und können von dem RFID-Transponder an einen RF-Empfänger übertragen werden. RF-Sender und RF-Empfänger können, und sind meistenteils, in einem einzigen Gerät integriert, dem sogenannten Reader.

Ferner kann in dem RFID-Transponder ein Antikollisionsverfahren implementiert sein, welches eine Datenübertragung von mehreren RFID-Transpondern ermöglicht, die sich innerhalb des RF-Feldes eines Senders befinden. Dem Fachmann sind aus dem Stand der Technik eine Reihe von Antikollisionsverfahren bekannt, welche bei RFID-Transpondern zur Anwendung kommen, unter anderem das Aloha-Verfahren und das Tree-Walking-Verfahren.

Zur objektiven Kontrolle und Auslesung der RFID-Transponder mit Speichermedien ist ferner vorgesehen, dass sämtliche elektronischen Komponenten mit einem Sicherheitsetikett versehen sind. Das Sicherheitsetikett wird hierbei vorzugsweise den Bereich des RFID-Transponders übergreifend auf das Pressblech oder Endlosband angebracht, damit bei einer Überprüfung der genutzten Pressbleche und Endlosbänder eine Kontrolle der Unversehrtheit des Siegels erfolgen kann.

Die Erfindung wird anhand der Figuren näher erläutert.

Es zeigt
- Fig. 1: zwei perspektivische Ansichten einer nichterfindungsgemäßen Ausführungsform eines Pressbleches,
- Fig. 2: einen Schnitt durch das Pressblech gemäß Figur 1 und
- Fig. 3: eine Ausführungsform eines erfindungsgemäßen Pressbleches.

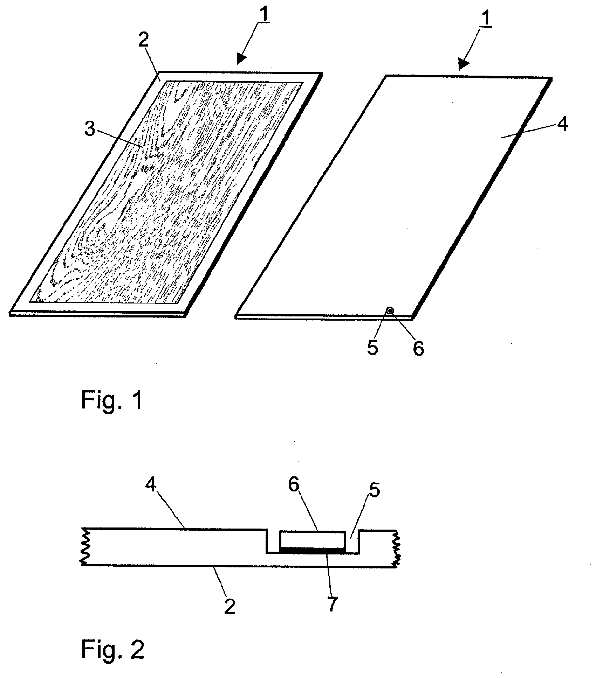

Figur 1 zeigt zwei perspektivische Ansichten einer nichterfindungsgemäßen Ausführungsform eines Pressbleches 1. In dem linken Teilbild der Figur 1 ist die strukturierte Prägeoberfläche 2 dem Betrachter zugewandt. Die Prägeoberfläche 2 weist eine Oberflächenstrukturierung 3 in Form einer Holzmaserung auf. Im rechten Teilbild ist die der Prägeoberfläche 2 abgewandte Außenfläche 4 dem Betrachter zugewandt. Im Randbereich der Außenfläche 4 ist eine Sacklochbohrung 5 ausgebildet, in welcher ein RFID-Transponder 6 angeordnet und an dem Pressblech befestigt ist. Der RFID-Transponder umfasst einen integrierten Speicher, welcher von dem RFID-Transponder 6 beschreibbar und auslesbar ist. Die Anordnung des RFID-Transponders 6 in einer Sacklochbohrung 5 schützt den RFID-Transponder 6 vor mechanischer Beschädigung bei Verwendung der bisweilen sehr großen Pressbleche 1. Je nach Größe des RFID-Transponders 6 kann dieser auch in einer in einer randseitigen Außenfläche des Pressbleches 1 ausgebildeten Sacklochbohrung oder einer Ausnehmung angeordnet werden. Da die Pressbleche 1 allerdings nur eine Dicke von wenigen Millimetern aufweisen, muss in diesem Fall ein sehr kleiner RFID-Transponder 6 verwendet werden.

Figur 2 zeigt einen Schnitt durch die Sacklochbohrung 5 und den RFID-Transponder 6 des Pressbleches 1 gemäß Figur 1. Die Sacklochbohrung 5 ist in der der Prägeoberfläche 2 abgewandten Außenfläche 4 ausgebildet. Innerhalb der Sacklochbohrung 5 ist der RFID-Transponder 6 angeordnet und befestigt. Zwischen dem Pressblech 1 und dem RFID-Transponder 6 ist eine thermische Isolation 7 angeordnet, welche den RFID-Transponder 6 vor zu starker Erhitzung und damit Beschädigung schützt. Die thermische Isolation 7 kann sich auch über die Seitenflächen des RFID-Transponders 6 erstrecken. Ebenso kann die thermische Isolation 7 die Sacklochbohrung 5 im Bereich zwischen dem RFID-Transponder 6 und der Seitenfläche der Sacklochbohrung 5 vollständig ausfüllen.

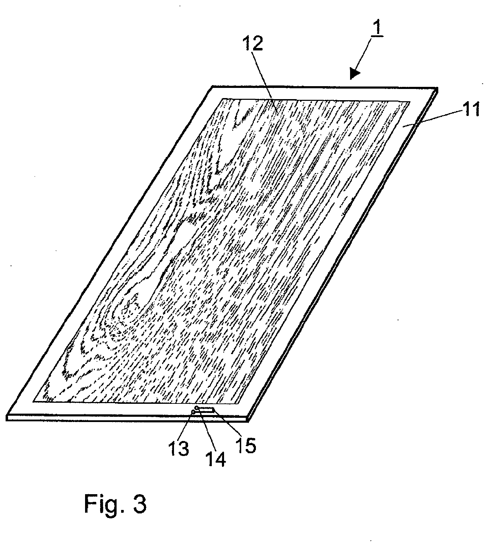

Figur 3 zeigt eine perspektivische Ansicht eines erfindungsgemäßen Pressbleches 10. Das Pressblech 10 umfasst eine Prägeoberfläche 11, welche eine Oberflächenstruktur 12 in Form einer Holzmaserung aufweist. Wie die nicht-erfindungsgemäße Ausführungsform weist das Pressblech 10 eine in der der Prägeoberfläche 11 abgewandten Außenfläche ausgebildete Sacklochbohrung (nicht gezeigt) auf. In der Sacklochbohrung ist ebenfalls ein RFID-Transponder angeordnet (nicht gezeigt). Zwischen dem RFID-Transponder und dem Pressblech 10 ist ebenfalls eine thermische Isolation angeordnet. Im Gegensatz zur nicht-erfindungsgemäßen Ausführungsform weist das Pressblech 10 in der erfindungsgemäßen Ausführungsform einen Temperatursensor 13 und einen Drucksensor 14 auf, welche jeweils im Randbereich der Prägeoberfläche 11 angeordnet sind und über Messleitungen mit dem RFID-Transponder verbunden sind. Die Messleitungen sind durch eine Bohrung 15 geführt, welche mit einem geeigneten Material versiegelt ist, sodass in diese nicht Bestandteile der zu verpressenden Werkstoffplatten, wie beispielsweise Melaminharz, eindringen können.

### Bezugszeichenliste

- 1: Pressblech
- 2: Prägeoberfläche
- 3: Oberflächenstruktur
- 4: Außenfläche
- 5: Sacklochbohrung
- 6: RFID-Transponder
- 7: thermische Isolation
- 10: Pressblech
- 11: Prägeoberfläche
- 12: Oberflächenstruktur
- 13: Temperatursensor
- 14: Drucksensor

## Patentansprüche

1. Pressblech (1) oder Endlosband, umfassend einen flachen Körper mit einer Prägeoberfläche (2) und zumindest einer nicht zur Prägung vorgesehenen Außenfläche (4), wobei das Pressblech (1) oder Endlosband zumindest einen RFID-Transponder (6) aufweist, wobei der RFID-Transponder mit einem elektronischen Speicher ausgestattet ist, welcher von dem RFID-Transponder (6) auslesbar und beschreibbar ist, und wobei in dem Speicher zumindest ein das Pressblech (1) oder Endlosband identifizierender Datensatz gespeichert ist, wobei
- das Pressblech (1) oder Endlosband zumindest einen Temperatursensor (13) aufweist, der mit dem RFID-Transponder (6) zusammenwirkt, sodass die Messwerte in dem Speicher des RFID-Transponders (6) speicherbar sind und/oder
- das Pressblech (1) oder Endlosband zumindest einen Drucksensor (14) aufweist, der mit dem RFID-Transponder (6) zusammenwirkt, sodass die Messwerte in dem Speicher des RFID-Transponders (6) speicherbar sind.

2. Pressblech (1) oder Endlosband nach Anspruch 1,
**dadurch gekennzeichnet,**
**dass** das Pressblech (1) oder Endlosband zumindest eine Sacklochbohrung (5) oder Ausnehmung aufweist, in welcher der RFID-Transponder (6) angeordnet ist.

3. Pressblech (1) oder Endlosband nach Anspruch 2,
**dadurch gekennzeichnet,**
**dass** die Sacklochbohrung (5) oder Ausnehmung in einer Außenfläche (4) des Pressbleches oder Endlosbandes ausgebildet ist.

4. Pressblech (1) oder Endlosband nach einem der Ansprüche 1 bis 3,
**dadurch gekennzeichnet,**
**dass** der zumindest eine RFID-Transponder (6) aktiv, semiaktiv oder passiv ausgebildet ist.

5. Pressblech (1) oder Endlosband nach einem der Ansprüche 1 bis 4,
**dadurch gekennzeichnet,**
**dass** zwischen dem RFID-Transponder (6) und dem Pressblech (1) oder Endlosband eine thermische Isolation (7) angeordnet ist.

6. Pressblech (1) oder Endlosband nach einem der Ansprüche 1 bis 5,
**dadurch gekennzeichnet,**
**dass** der RFID-Transponder (6) eine Spannungs- und Stromquelle umfasst.

7. Pressblech (1) oder Endlosband nach einem der Ansprüche 1 bis 6,
**dadurch gekennzeichnet,**
**dass** in dem RFID-Transponder (6) ein Antikollisionsverfahren implementiert ist.

8. Pressblech (1) oder Endlosband nach einem der Ansprüche 1 bis 7,
**dadurch gekennzeichnet,**
**dass** der RFID-Transponder (6) mit einem Sicherheitsetikett ausgestattet ist.

9. Pressblech (1) oder Endlosband nach einem der Ansprüche 1 bis 8,
**dadurch gekennzeichnet,**
**dass** in dem Speicher Nutzungsdaten und/oder Herstellungsdaten des Pressbleches (1) oder Endlosbandes gespeichert sind.

10. Pressblech (1) oder Endlosband nach Anspruch 9, **dadurch gekennzeichnet,**
**dass** die Nutzungsdaten aus der Gruppe von Daten, bestehend aus Anpressdruck, Anpressdauer, Temperatur der Prägeoberfläche, Material der Werkstoffplatte, Zeitpunkt einer Verpressung, Anzahl an Verpressungen, Name und Anschrift einer oder mehrerer Personen oder Firmen, ausgewählt sind, und die Herstellungsdaten aus der Gruppe von Daten, bestehend aus Materialien des Körpers, Beschichtungsmaterialien der Prägeoberfläche, Informationen über Oberflächenbehandlungen der Prägeoberfläche und Informationen über die Struktur der Prägeoberfläche, ausgewählt sind.

## Claims

1. Press plate (1) or endless belt, comprising a flat body with a stamping surface (2) and at least one external surface (4) which is provided not for stamping,
wherein
the press plate (1) or endless belt comprises at least one RFID transponder (6), and the RFID transponder is equipped with an electronic memory which can be read and written to by the RFID transponder (6), and wherein at least one data record identifying the press plate (1) or endless belt is stored in the memory, wherein
- the press plate (1) or endless belt comprises at least one temperature sensor (13) which cooperates with the RFID transponder (6) so that measurement values can be stored in the memory of the RFID transponder (6), and/or
- the press plate (1) or endless belt has at least one pressure sensor (14) which cooperates with the RFID transponder (6) so that measurement values can be stored in the memory of the RFID transponder (6).

2. Press plate (1) or endless belt according to claim 1,
**characterized in**
**that** the press plate (1) or endless belt comprises at least one blind bore (5) or recess in which the RFID transponder (6) is disposed.

3. Press plate (1) or endless belt according to claim 2,
**characterized in**
**that** the blind bore (5) or recess is disposed in an external surface (4) of the press plate or endless belt.

4. Press plate (1) or endless belt according to one of claims 1 to 3,
**characterized in**
**that** the at least one RFID transponder (6) is of an active, semi-active or passive type.

5. Press plate (1) or endless belt according to one of claims 1 to 4,
**characterized in**
**that** thermal insulation (7) is disposed between the RFID transponder (6) and the press plate (1) or endless belt.

6. Press plate (1) or endless belt according to one of claims 1 to 5,
**characterized in**
**that** the RFID transponder (6) comprises a voltage and current source.

7. Press plate (1) or endless belt according to one of claims 1 to 6,
**characterized in**
**that** an anti-collision process is implemented in the RFID transponder (6).

8. Press plate (1) or endless belt according to one of claims 1 to 7,
**characterized in**
**that** the RFID transponder (6) is equipped with a security tag.

9. Press plate (1) or endless belt according to one of claims 1 to 8,
**characterized in**
**that** use data and/or manufacturing data of the press plate (1) or endless belt is stored in the memory.

10. Press plate (1) or endless belt according to one of claim 9,
**characterized in**
**that** the use data is selected from the group of data comprising pressing pressure, pressing duration, temperature of the stamping surface, material of the composite panel, time of a pressing operation, number of pressing operations, name and address of one or more persons or companies, and the manufacturing data is selected from the group of data comprising material of the body, coating materials of the stamping surface, information about surface treatments of the stamping surface and information about the structure of the stamping surface.

## Revendications

1. Tôle de presse (1) ou bande sans fin, comprenant un corps plat avec une surface d'empreinte (2) et au moins une surface externe (4) non prévue pour une empreinte, la tôle de presse (1) ou la bande sans fin comprenant au moins un transpondeur RFID (6), le transpondeur RFID étant équipé d'une mémoire électronique, qui peut être lue et écrite par le transpondeur RFID (6) et au moins un ensemble de données identifiant la tôle de presse (1) ou la bande sans fin étant stocké dans la mémoire,
- la tôle de presse (1) ou la bande sans fin comprenant au moins un capteur de température (13), qui interagit avec le transpondeur RFID (6), de façon à ce que les valeurs de mesure puissent être stockées dans la mémoire du transpondeur RFID (6) et/ou
- la tôle de presse (1) ou la bande sans fin comprenant au moins un capteur de pression (14), qui interagit avec le transpondeur RFID (6), de façon à ce que les valeurs de mesure puissent être stockées dans la mémoire du transpondeur RFID (6).

2. Tôle de presse (1) ou bande sans fin selon la revendication 1,
**caractérisée en ce que**
la tôle de presse (1) ou la bande sans fin comprend au moins un alésage borgne (5) ou un évidement dans lequel le transpondeur RFID (6) est disposé.

3. Tôle de presse (1) ou bande sans fin selon la revendication 2,
**caractérisée en ce que**
l'alésage borgne (5) ou l'évidement est réalisé dans une surface externe (4) de la tôle de presse ou la bande sans fin.

4. Tôle de presse (1) ou bande sans fin selon l'une des revendications 1 à 3,
**caractérisée en ce que**
l'au moins un transpondeur RFID (6) est conçu de façon à être actif, semi-actif ou passif.

5. Tôle de presse (1) ou bande sans fin selon l'une des revendications 1 à 4,
**caractérisée en ce que**
entre le transpondeur RFID (6) et la tôle de presse (1) ou la bande sans fin, est disposée une isolation thermique (7).

6. Tôle de presse (1) ou bande sans fin selon l'une des revendications 1 à 5,
**caractérisée en ce que**
le transpondeur RFID (6) comprend une source de tension et de courant.

7. Tôle de presse (1) ou bande sans fin selon l'une des revendications 1 à 6,
**caractérisée en ce que**
dans le transpondeur RFID (6) est implémenté un procédé anti-collision.

8. Tôle de presse (1) ou bande sans fin selon l'une des revendications 1 à 7,
**caractérisée en ce que**
le transpondeur RFID (6) est équipé d'une étiquette de sécurité.

9. Tôle de presse (1) ou bande sans fin selon l'une des revendications 1 à 8,
**caractérisée en ce que**
dans la mémoire sont stockées des données d'utilisation et/ou des données de fabrication de la tôle de presse (1) ou de la bande sans fin.

10. Tôle de presse (1) ou bande sans fin selon la revendication 9,
**caractérisée en ce que**
les données d'utilisation sont sélectionnées dans le groupe de données constitué de la pression de contact, de la durée de contact, de la température de la surface d'empreinte, du matériau de la plaque de matériau, du moment de pressage, du nombre de pressages, du nom et de l'adresse d'une ou plusieurs personnes ou sociétés, et les données de fabrication sont sélectionnées dans le groupe de données constitué des matériaux du corps, des matériaux de revêtement de la surface d'empreinte, des informations concernant les traitements de surface de la surface d'empreinte et des informations concernant la structure de la surface d'empreinte.
